# EUROPEAN PATENT SPECIFICATION

(11) **EP 0 655 822 B1**
(45) Date of publication and mention of the grant of the patent: **03.09.1997**
(21) Application number: 94308344.4
(22) Date of filing: 11.11.1994
(51) Int. Cl.: H02K 5/22, H02K 5/10, H01R 13/20

(54) **A miniature electric motor**
Elektrischer Kleinmotor
Moteur électrique miniature

(30) Priority: 20.11.1993 GB 9323932
(43) Date of publication of application: 31.05.1995
(73) Proprietor: JOHNSON ELECTRIC S.A., CH-2300 La Chaux-de-Fonds (CH)
(72) Inventor: Strobl, Georg, D-70184 Stuttgart (DE)
(74) Representative: Higgins, Michael Roger

(56) References cited:
- EP-A- 0 360 623
- EP-A- 0 539 094
- GB-A- 2 139 820
- US-A- 4 374 607

## Description

The present invention relates to a miniature electric motor and in particular to a miniature motor with a splashproof cover.

Small permanent magnet d.c. motors may be used in situations where they may be exposed to water, for example, in vehicles. To prolong efficient motor operation, a splashproof or waterproof sleeve can be put over the can-like motor casing. However, it is not easy to cover the motor end cap due to the presence of the terminals. Different vehicle manufacturers require different terminal configurations which obliges the motor manufacturer to provide end caps with different configurations.

A prior design proposed by the present applicant is described in GB2225672. The cover was designed specifically for the end cap of an electric motor having male motor terminals and also required the end cap to be manufactured with separate slots formed in the end cap to receive mounting or locking pins. Accordingly, the splashproof cover had apertures in the body of the cover adapted to receive the male motor terminals and electrically connect them with the external terminals of the splashproof cover.

While this cover performed satisfactorily, it did have a disadvantage in that a significant number of motor terminals were damaged during assembly of the splashproof cover to the motor end cap resulting in unsatisfactory connections between the motor terminal and the terminals of the cover. This was caused by a slight misalignment between the motor terminals and the apertures in the cover during assembly. Due to the thinness of the cover in the area of the apertures, there was not sufficient material to provide an adequate lead-in to the apertures for the motor terminals to accommodate the misalignment during assembly. Making the cover thicker to provide this lead-in increased the length of the motor.

The present invention aims to at least reduce the disadvantages of known splashproof covers for miniature motors and in particular, to provide a splashproof cover for a miniature motor having female terminals. This is achieved by providing the splashproof cover with axially extending male terminals adapted to engage the female motor terminals located within slots formed in the end cap and the cover terminals having serrated or sawtooth like edges which bite into the end walls of the slots to secure the cover to the end cap. This does away with the apertures on the splashproof cover and the need for separate mounting or holding pins to secure the cover to the end cap.

This arrangement reduces the likelihood of damage to the motor terminals due to misalignment during fitting of the cover to the end cap because, firstly, the male terminals on the cover can be made larger or thicker than the standard male motor terminal but more importantly, because the female motor terminals are located within the end cap of the motor, a greater lead-in portion to the female terminals can be provided to guide the cover terminals into position without damage.

An additional advantage is that a standard end cap assembly with female-type motor terminals can be used with the user's specified terminal arrangements being provided by the cover which is a simple insert moulded part. Hence no changes need to be made to the end cap assembly design or manufacturing process which is important with automated assembly lines where even small changes result in expensive and time consuming re-configuration and adjustments to the automated assembly machines.

Thus, in one aspect, the present invention provides a miniature electric motor comprising a can-like casing having one open end, an end cap closing the open end of the casing and supporting motor terminals, a rotor including a shaft rotatably mounted in bearings fitted to the end cap and casing, and a splashproof cover covering the end cap and connecting the motor terminals to an external connector formed on the cover, wherein the motor terminals are female terminals disposed in slots formed in the end cap and the cover has tongue-like terminals with serrated edges disposed within the slots and making electrical contact with the female terminals, the serrated edges of the cover terminals being engaged with end walls of the slots to resist removal from the slots, thereby securing the cover to the end cap.

Preferably, the tongues are formed integrally with respect to the conductors from a sheet of conductive material. In this manner, the tongues are formed as part of the conductors and thus eliminating the need for an additional connection between the tongues and the connectors.

It is also preferable that the cover has a locating pin which mates with a corresponding hole in the end cap to ensure that the cover can only be fitted to the end cap in one orientation to avoid reversing the motor connections.

The cover preferably has an integrally formed peripheral skirt arranged to encircle an outer periphery of the end cap. The skirt may be adapted to form a water resistant or waterproof seal with a housing of an appliance to which the motor is fitted.

Preferred embodiments of the invention will now be described, by way of example only, with reference to the accompanying drawings, in which:
Figure 1 is a side view of a miniature p.m.d.c. motor having fitted thereon a splashproof cover according to the present invention, shown in partial section;
Figure 2 illustrates an end view of the outside of the cover of Figure 1;
Figure 3 is a cross section along Line III-III of Figure 2;
Figure 4 is a perspective view of the end cap of Figure 1 showing the inside surface;
Figure 5 is a partly cutaway plane view of the motor of Figure 1; and
Figure 6 is a similar view to Figure 3 of another embodiment.

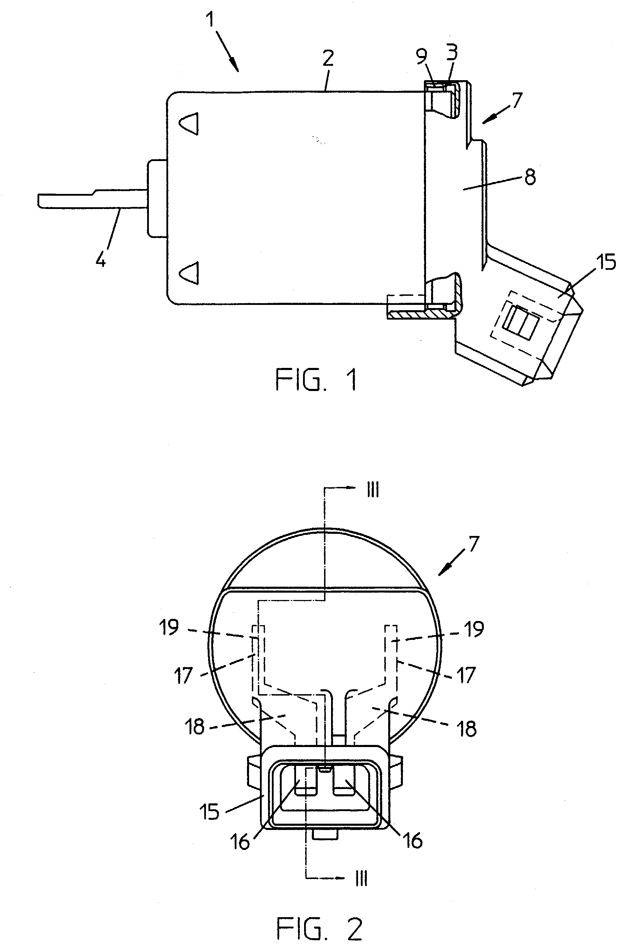

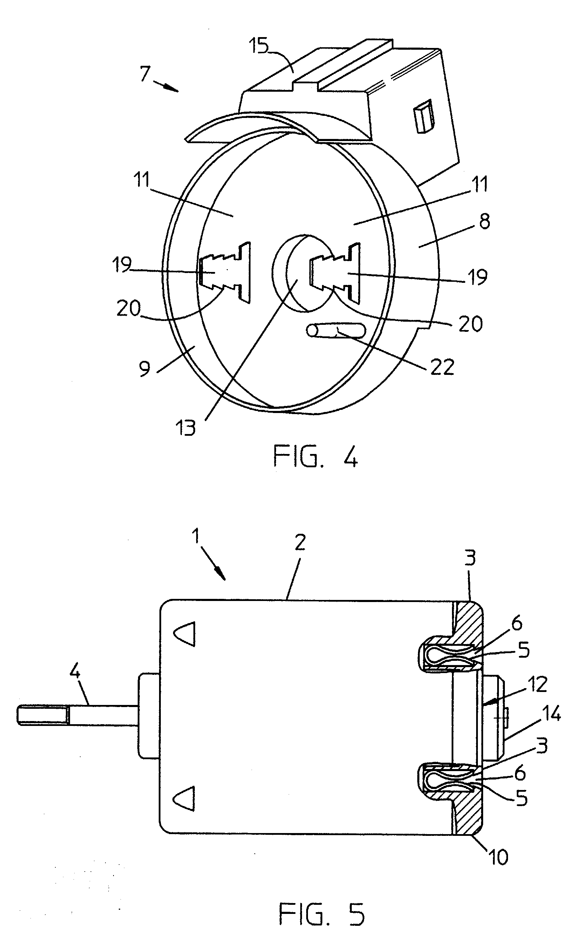

Referring to the drawings, Figures 1 and 5 show a miniature p.m.d.c. motor 1 having a housing comprising a deep drawn can-like steel casing 2 and a plastics end cap 3. A shaft 4 is journalled in bearings in the casing 2 and end cap 3. The shaft 4 carries a wound armature and commutator (not shown) and the casing 2 carries two permanent magnets (also not shown). The end cap 3 carries brush gear (not shown) electrically connected to two motor terminals 5 for supplying power to the commutator. The construction thus far described is well known in the art.

The two motor terminals 5 are female terminals located within respective slots 6 formed in the end cap. The slots have side walls facing the motor terminals and end walls joining the side walls and facing the edges of the motor terminals.

A splashproof cover 7 according to the preferred embodiment of the present invention is shown in Figure 1 fitted to the motor 1. The cover 7, as more clearly shown in Figures 2, 3 and 4, comprises a moulded plastics material body 8 having a peripheral skirt 9 which encircles the outer periphery 10 of the end cap 3. An inner surface 11 of the body 8 bears against the outer surface 12 of the end cap 3 and has a recess 13 for receiving a boss 14 on the end cap which carries a shaft bearing (not shown). A socket 15 housing two connector terminals 16 is integrally formed on the body 8.

Two conductors 17 are insert moulded in the cover 7. The conductors each comprise a planar body part 18 encased by the body 8. The connector terminals 16 are integral with the conductors and extend out of the plane of the respective body parts 18 into the socket 15 for connecting to an external power supply. Each conductor 17 further comprises a tongue 19 formed integrally with the body part and extending transversely to the plane of the body part to mate with a respective female terminal 5 of the motor to make electrical contact therewith. The tongues thus form male terminals on the cover. The tongues or cover terminals 19 have sawtooth or serrated edges 20 that are arranged to grip the end walls of the female terminal slot 6 in the end cap 3 to resist removal of the tongue from the slot, thus locking the cover to the end cap.

A post 22 extends perpendicularly from the inner surface 11 of the body 8 to mate with a corresponding hole in the end cap (not shown) in order to assist alignment of the tongues with the female terminal slots 6 and to prevent the cover from being fitted around the wrong way.

The motor end cap 3 is of standard configuration and may have vent holes or hollow rivets therein through which water can enter the motor. The motor is usable without the cover 7, electrical connection being made to the motor terminals 5 in the usual way. In use, the cover 7 is slid over the end cap 3. The tongues 19 penetrating the slot 6 and mating with the female terminals 5 of the motor. The sawtooth or serrated edges 20 of the tongues grip the end walls of the slot 6 to hold the cover on the end cap. The post 22 ensures that the cover will fit on the end cap in only one orientation to avoid reversing the polarity of the motor. The inner surface 11 bears against the end cap to cover any vent holes or other apertures in the end cap. A power supply may then be connected to the connector 15 to supply power to the motor brush gear via connector terminals 16, body parts 18, tongues 19 and motor terminals 5.

The skirt 9 may be a snug fit about the periphery 10 of the end cap to inhibit the ingress of water between the cover and the end cap. Also, the skirt may extend down the side of the motor, over the casing 2. A sleeve (not shown) may enclose the casing 2 and mate with the skirt 9 to cover any vent holes, etc., in the casing.

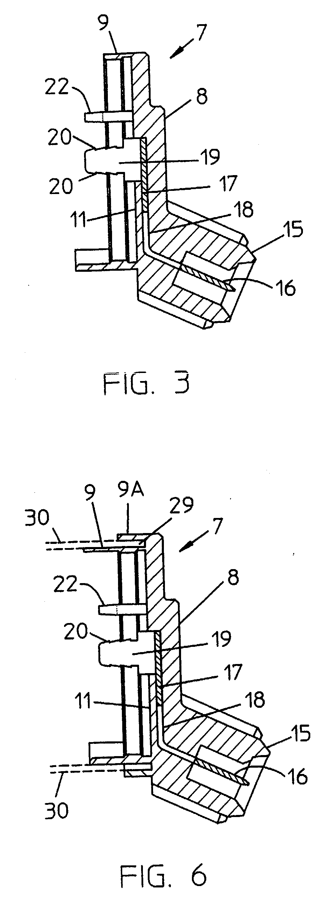

In Figure 6, the cover 7 is shown with an extended peripheral skirt 9 which has a smaller outer skirt or lip 9A forming an annular axially extending recess 29. This recess is adapted or arranged to mate with a housing part 30 of an appliance to which the motor is fitted to produce a water resistant or waterproof seal between the cover and the housing to seal the housing and/or protect the motor.

The connector 15 may be of various shapes to suit the customers' connection requirements whilst the shape of the end cap can remain constant. Thus, a standard motor can be adapted to suit various customers' connection requirements by using a splashproof cover with varying connector configurations. This is cost effective as the cost of producing a variety of covers is less than producing a variety of end caps. By using a motor with female terminals, separate cover terminals and mounting tongues can be avoided while allowing greater tolerance in the alignment between the end cap and the cover during fitting.

## Claims

1. A miniature electric motor comprising a can-like casing (2) having one open end, an end cap (3) closing the open end of the casing and supporting motor terminals (5), a rotor including a shaft (4) rotatably mounted in bearings fitted to the end cap (3) and casing (2), and a splashproof cover (7) covering the end cap (3) and connecting the motor terminals (5) to an external connector (15) formed on the cover (3), characterized in that the motor terminals (5) are female terminals disposed in slots (6) formed in the end cap (3) and the cover (7) has tongue-like terminals (19) with serrated edges (20) disposed within the slots (6) and making electrical contact with the female terminals (5), the serrated edges (20) of the cover terminals (19) being engaged with end walls of the slots (6) to resist removal from the slots, thereby securing the cover (7) to the end cap (3).

2. A motor as defined in Claim 1 wherein the cover has a dependent peripheral skirt (9) which extends axially of the motor along an outer periphery of the end cap.

3. A motor as defined in Claim 2 wherein the peripheral skirt (9) extends axially of the motor to cover at least a portion of the casing (2) and is adapted to sealingly engage with a housing of an appliance to which the motor is fitted.

4. A motor as defined in any one of the preceding claims wherein the cover (7) comprises a generally circular solid moulded plastics material planar body (8) integrally formed with the external connector (15) and embedding conductors (17) integral with the tongue-like terminals (19) and forming terminal elements (16) in the external connector.

5. A motor as defined in any one of the preceding claims wherein means (22) formed between the cover (7) and the end cap (3) allows fitting of the cover (7) to the end cap (3) in only one orientation.

## Patentansprüche

1. Elektrischer Kleinmotor, der folgende Komponenten umfaßt: ein dosenartiges Gehäuse (2) mit einem offenen Ende, eine Endkappe (3), die das offene Ende des Gehäuses verschließt und die Anschlußklemmen (5) des Motors trägt, einen Rotor einschließlich einer Welle (4), die drehbar in Lagern montiert ist, die an der Endkappe (3) und dem Gehäuse (2) angebracht sind, und einen spritzwasserdichten Deckel (7), der die Endkappe (3) bedeckt und die Anschlußklemmen (5) der Motors mit einem äußeren Anschluß (15) verbindet, der auf dem Deckel (3) gebildet wird, dadurch gekennzeichnet, daß die Anschlußklemmen (5) des Motors aufnehmende Anschlußklemmen sind, die in Schlitzen (6) angeordnet sind, die in der Endkappe (3) gebildet werden, und der Deckel (7) zungenartige Anschlußklemmen (19) mit gezahnten Kanten (20) hat, die innerhalb der Schlitze (6) angeordnet sind und den elektrischen Kontakt mit den aufnehmenden Anschlußklemmen (5) herstellen, wobei die gezahnten Kanten (20) der Deckel-Anschlußklemmen (19) mit den Stirnwänden der Schlitze (6) ineinandergreifen, um einem Herausziehen aus den Schlitzen zu widerstehen, um dadurch den Deckel (7) an der Endkappe (3) zu sichern.

2. Motor nach Anspruch 1, bei dem der Deckel einen anschließenden Umfangsrand (9) hat, der sich in der Axialrichtung des Motors längs eines äußeren Umfangs der Endkappe erstreckt.

3. Motor nach Anspruch 2, bei dem der Umfangsrand (9) sich in der Axialrichtung des Motors erstreckt, um wenigstens einen Abschnitt des Gehäuses (2) zu bedecken, und in der Lage ist, abdichtend mit einem Gehäuse eines Gerätes, in das der Motor eingesetzt wird, ineinanderzugreifen.

4. Motor nach einem der vorstehenden Ansprüche, bei dem der Deckel (7) einen allgemein zylindrischen festen planen Körper (8) aus gespritztem Plastmaterial umfaßt, der mit dem äußeren Anschluß (15) aus einem Stück gebildet wird und in den Leiter (17), die mit den zungenartigen Anschlußklemmen (19) aus einem Stück bestehen, eingebettet sind und Anschlußelemente (16) im äußeren Anschluß bilden.

5. Motor nach einem der vorstehenden Ansprüche, bei dem Mittel (22), die zwischen dem Deckel (7) und der Endkappe (3) gebildet werden, das Aufsetzen des Deckels (7) an der Endkappe (3) in nur einer Ausrichtung ermöglichen.

## Revendications

1. Moteur électrique miniature comprenant un carter en forme de boîte (2) avec une extrémité ouverte, et un capuchon d'extrémité (3) fermant l'extrémité ouverte du carter et supportant les bornes du moteur (5), un rotor englobant un arbre (4), monté par rotation dans des paliers agencés sur le capuchon d'extrémité (3) et le carter (2), et un couvercle de protection contre les projections d'eau (7) recouvrant le capuchon d'extrémité (3) et connectant les bornes du moteur (5) à un connecteur externe (15) agencé sur le couvercle (3), caractérisé en ce que les bornes du moteur (5) sont des bornes femelles agencées dans des fentes (6) formées dans le capuchon d'extrémité (3) et en ce que le couvercle (7) comporte des bornes en forme de languette (19) avec des bords cannelés (20), agencées à l'intérieur des fentes (6) et établissant le contact électrique avec les bornes femelles (20), les bords cannelés (20) des bornes du couvercle (19) étant engagés dans les parois d'extrémité des fentes (6) pour résister à une sortie des fentes, fixant ainsi le couvercle (7) au capuchon d'extrémité (3).

2. Moteur comme défini dans la revendication 1, dans lequel le couvercle comporte une collerette périphérique dépendante (9), s'étendant axialement par rapport au moteur le long d'une périphérie externe du capuchon d'extrémité.

3. Moteur comme défini dans la revendication 2, dans lequel la collerette périphérique (9) s'étend axialement par rapport au moteur pour recouvrir au moins une partie du carter (2) et sert à s'engager de façon étanche dans un boîtier d'un dispositif sur lequel le moteur est agencé.

4. Moteur comme défini dans l'une quelconque des revendications précédentes, dans lequel le couvercle (7) comprend un corps plan moulé en plastique solide généralement circulaire (8) faisant partie intégrante du connecteur externe (15), et des conducteurs encastrés (17) faisant partie intégrante des bornes en forme de languette (19) et formant des éléments de borne (16) dans le connecteur externe.

5. Moteur comme défini dans l'une quelconque des revendications précédentes, dans lequel un moyen (22) agencé entre le couvercle (7) et le capuchon d'extrémité (3) permet l'ajustement du couvercle (7) sur le capuchon d'extrémité (3) dans une seule orientation.
